# EUROPEAN PATENT APPLICATION

(11) **EP 0 534 555 A1**
(43) Date of publication of application: **31.03.1993**
(21) Application number: 92202919.4
(22) Date of filing: 23.09.1992
(51) Int. Cl.: C08J 7/18, C09D 133/02, C09D 133/14, C08F 2/34, C08F 2/48

(54) **Method for improving the surface properties of formed bodies of elastomeric material**

(30) Priority: 23.09.1991 IT MI912528
(71) Applicant: ISTITUTO GUIDO DONEGANI S.p.A., I-28100 Novara (IT)
(72) Inventor: Morra, Marco, I-14040 Cortiglione (Asti) (IT); Occhiello, Ernesto, I-28100 Novara (IT); Garbassi, Fabio, I-28100 Novara (IT)
(74) Representative: Fusina, Gerolamo

(57) **Abstract**

A method for improving the surface properties of formed bodies of elastomeric material, comprising depositing on the surface of said bodies a polymer layer obtained by vapour-phase polymerization, activated by ultraviolet radiation, of at least one acrylic monomer containing at least one terminal -COOH and/or -ROH.

## Description

This invention relates to a method for improving the surface properties of formed bodies of elastomeric material.

More specifically, the invention relates to a method for reducing the coefficient of friction while at the same time increasing the paintability and adhesion of surfaces of formed bodies of elastomeric material.

The term "formed bodies of elastomeric material" as used in the present description and claims means thermoplastic rubber products of any shape and size obtained by the more common transformation methods such as injection moulding, extrusion, thermoforming, blow moulding, rotomoulding etc.

Examples of products formed of elastomeric material which can be treated by the method of the present invention include sheets, strips, gaskets, section bars, tubes etc.

For many elastomeric products it would be desirable for their surfaces to be of high slippage and hence of low coefficient of friction while maintaining the typical flexibility of such materials. However, most of the more common elastomers such as natural rubber, neoprene, EPDM rubbers, SBR etc. have relatively high coefficients of friction.

Typical examples of elastomeric products in which the coefficient of friction is important are windscreen wiper blades or vehicle window gaskets between which the windows slide. Reducing the coefficient of friction would enable the power of the windscreen wiper and window regulator motors to be reduced respectively.

For many applications in which the elastomeric products are visible, appearance is also important. The possibility of painting the products or applying to them an adhering external coloured layer is therefore an interesting additional requisite.

Examples of products in which a low coefficient of friction could be required together with good paintability and adhesion again include the gaskets between which vehicle windows are located and slide.

In confronting the problem of reducing the coefficient of friction of an elastomer, the solution most often applied is to incorporate within the rubber a lubricant such as waxes, molybdenum disulphide, graphite or silicone oils.

This solution has various drawbacks, in that the large quantity of lubricant required to reduce the coefficient of friction can lead to a worsening of the mechanical properties of the product. In addition the resultant surfaces are neither paintable nor adherable.

A further solution is to reduce the area of contact between the elastomeric product and the external object, such as an automobile side window. This result is commonly achieved by flocking, ie applying vertical fibrils, for example of polyester, to the elastomer surface. It is apparent that in addition to requiring a technically complicated process, this solution in no way improves the product paintability and adhesion.

Further methods for reducing the coefficient of friction include the application of layers of low coefficient of friction to the product surface. Such layers are mostly based on fluorinated substances.

Examples of such methods are the application of coatings containing polytetrafluoroethylene, described in published German patent application 2,054,682, or the application of fluorinated acrylates deposited as a formulation (USA patent 3,632,400 or GB patent 1,090,162) or as a plasma (USA patent 4,374,180).

Published German patent application 3415381 and GB patent 1,120,804 also describe the direct fluorination of rubber or of acrylic layers previously deposited thereon, without however achieving improved paintability and adhesion. Layers of acrylic and methacrylic monomers can be deposited on polymer surfaces in various ways, such as by spreading and then cross-linking, or by liquid-phase impregnation activated by ionizing radiation or by known methods.

It is also known that the paintability and adhesion of elastomeric products can be modified and improved by suitable methods, for example treatment with acid and/or basic and/or oxidizing solutions, or by electrical corona discharge or cold plasma treatment.

Further methods reported in the art include treatment with alkyl hypohalides (USA patent 3,968,316) or with organic siloxanes (USA patent 3,935,342). However it is noted that these methods do not significantly reduce the coefficient of friction.

The applicant has now found that elastomeric products with simultaneously reduced coefficient of friction and increased paintability and adhesion can be obtained by vapour-phase polymerization of acrylic and/or methacrylic monomer products supporting carboxyl and/or hydroxyl groups.

The present invention therefore provides a method for reducing the coefficient of friction while at the same time increasing the paintability and adhesion of surfaces of formed bodies of elastomeric material comprising depositing on the surface of said formed bodies at least one polymer layer obtained by vapour-phase polymerization, activated by ultraviolet radiation, of at least one acrylic monomer containing at least one terminal -COOH and/or -ROH where R is an alkylene radical containing from 1 to 4 carbon atoms.

More specifically, the present invention provides a method for reducing the coefficient of friction while at the same time increasing the paintability and adhesion of surfaces of formed bodies of elastomeric material comprising:
a) positioning the formed body of elastomeric material in a treatment chamber;
b) feeding into the treatment chamber a liquid phase consisting essentially of an acrylic monomer containing at least one terminal -COOH and/or -ROH group where R has the aforesaid meaning;
c) vaporizing the acrylic monomer by application of vacuum to obtain a partial pressure of said monomer of between 5 and 5000 Pa, and preferably between 10 and 1500 Pa;
d) polymerizing the acrylic monomer onto the formed body by polymerization activated by ultraviolet radiation.

The present invention more particularly provides a method for reducing the coefficient of friction while at the same time increasing the paintability and adhesion of surfaces of formed bodies of elastomeric material comprising:
a) positioning the formed body of elastomeric material in a vacuum treatment chamber evacuated to a pressure of between 1 and 1500 Pa and preferably between 10 and 150 Pa;
b) feeding into the treatment chamber a vapour consisting essentially of an acrylic monomer containing at least one terminal -COOH and/or -ROH group where R has the aforesaid meaning, until a partial pressure of between 5 and 5000 Pa and preferably between 10 and 1500 Pa is obtained;
c) polymerizing the acrylic monomer onto the formed body by polymerization activated by ultraviolet radiation.

Any elastomeric material can be used in the method of the present invention, for example natural rubber, polyisoprene, polybutadiene, styrene-butadiene copolymers, ethylene-propylene copolymers, EPDM copolymers, butadiene acrylonitrile copolymers, polychloroprene, acrylic rubbers etc.

The acrylic monomers with -COOH and/or -ROH terminals are preferably chosen from those easily evaporable under the conditions indicated. In particular, monomers with a vapour pressure exceeding 10 Pa at 25°C are preferred. Examples of such monomers are hydroxyethylacrylate, hydroxyethylmethacrylate, and acrylic acid.

Irradiation can be effected using wavelengths of between 190 and 600 nm, and preferably between 250 and 400 nm. When irradiation is effected at wavelengths exceeding 300 nm, it is preferable to activate the material surface. Activation can be achieved by immersing the product in a solution based on organic solvents such as pentane, hexane, heptane, cyclohexane, acetone etc. containing between 0.1 and 5% of photoactivators such as benzophenone, anthraquinone or benzoylperoxide.

On termination of the polymerization the thickness deposited on the formed body of elastomeric material is generally between 100 and 50,000 nm, and preferably between 10,000 and 30,000 nm, to simultaneously ensure good tribological and paintability properties.

The polymerization is effected at ambient or slightly higher than ambient temperature, for example between 25 and 80°C for a time sufficient to form the indicated thickness.

The present invention further relates to the formed bodies of elastomeric material obtained by the aforesaid method.

More specifically, the present invention provides formed bodies of elastomeric material coated with a coating of thickness between 100 and 50,000 nm obtained by vapour-phase polymerization, activated by ultraviolet radiation, of acrylic monomers with terminal -COOH and/or -ROH groups, where R has the aforesaid meaning.

The formed bodies of elastomeric material according to the present invention are characterised by a coefficient of friction, measured as stated in Examples 1, of between 0.4 and 0.5, and an adhesivity, measured in accordance with ASTM D 3359, of between 3 and 5.

Some examples are given hereinafter to illustrate the invention but without in any way limiting its scope thereto.

### EXAMPLES 1-3

Strips of elastomeric material of size 20 x 70 x 2 mm (EPDM rubber of Dutral, Ferrara) were immersed for 25 minutes in a 2% solution of benzophenone in n-heptane.

Said strips were then fixed inside glass test-tubes in the presence of 20 cl of an aqueous 40 vol% solution of the acrylic monomers concerned.

Vacuum was then applied to the test-tube by a rotary pump to achieve a pressure of 50 Pa.

The test-tube was then inserted into an APQ 40 annular photoreactor manufactured by Applied Photophysics Ltd. London, maintaining the temperature at 60°C.

Irradiation was effected by a medium pressure mercury lamp operating at 365 nm for a time of 30 minutes. Thicknesses of the order of 25,000 nm were obtained.

The product obtained was perfectly paintable, and was subjected to static friction and paint adhesion measurements. The type of monomer used, the measured static friction and the adhesivity are given in Table 1. The values are the average of at least three determinations.

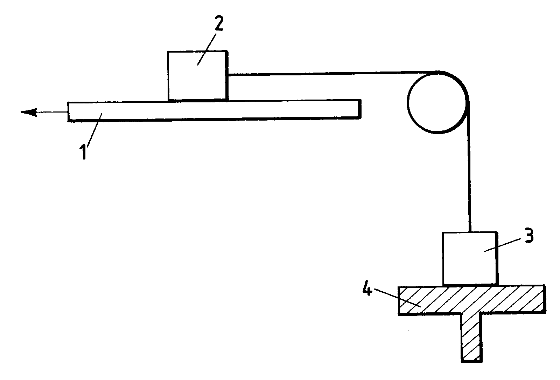

The static friction was determined by an apparatus shown schematically in the Figure. A strip of treated material 1 was placed under a metal object 2 of constant weight and contact area.

Another constant weight 3 was connected to the side of the object and placed on a balance 4. The material strip 1 was then pulled at constant speed and the weight indicated by the balance 4 when the object began to slide was noted.

The rusult has been expressed in terms of the difference between the weight which has been recorded for the treated material and that of the untreated material, divided by the weight of (3 ).

Higher values indicate a lower static friction, the treated strip 3 being less capable of raising the weight.

Table 1 includes as reference value the static friction of a strip of polytetrafluoroethylene (PTFE, Algoflon, supplied by Montefluos, Milan) of the same shape. It can be seen that with the treatment of the invention, static friction values close to those of PTFE are achieved.

Some strips were then painted with a conventional nitrocellulose paint (for vehicles). Paint adhesion was evaluated by tearing tests (Scotch tape test) derived from ASTM D 3359. The adhesivity scale of ASTM D 3359 goes from 0 to 5, the latter value being maximum adhesivity. In all cases decisive improvements were observed compared with the non-treated material.

### EXAMPLES 4-5

Strips of elastomeric material of size 20 x 70 x 2 mm (EPDM rubber of Dutral, Ferrara) were fixed inside quartz test-tubes in the aforedescribed manner. Irradiation was effected by a low pressure mercury lamp operating at 254 nm for a time of 30 minutes.

Deposited polymer thicknesses of about of 25,000 nm were obtained.

The type of monomer used, the static friction measured and the adhesivity are given in Table 2.

The given values are again the average of three determinations.

The determinations were made as heretofore described. The results are analogous to those of the preceding examples.

### EXAMPLE 6 (Comparative)

Strips of elastomeric material of size 20 x 70 x 2 mm (EPDM rubber of Dutral, Ferrara) were treated in the manner described in

### Examples 1-3.

Methylmethacrylate was used as the monomer.

The determinations of static friction and adhesivity were made as heretofore described. A static friction value of 0.35 was obtained, considerably less than that measured in Examples 1-5.

There was no paint adhesion, the value being 0 on the ASTM D 3359 scale.

### EXAMPLES 7-8 (Comparative)

Strips of elastomeric material of size 20 x 70 x 2 mm (EPDM rubber of Dutral, Ferrara) were treated with the monomers suggested in Examples 1-3. The monomers were however deposited on the product by direct immersion, the product then being irradiated with a low pressure lamp operating at 254 nm for 30 minutes.

The monomer used, the static friction measured and the adhesivity are given in Table 3.

The determinations were made as heretofore described. The results obtained in terms of both static friction and adhesivity were considerably worse than those of Examples 1-5.

**TABLE 1**

| Monomer used | Friction | Adhesivity |
|---|---|---|
| As such | 0.00 | 0 |
| AAc | 0.46 | 4 |
| HEA | 0.47 | 4 |
| HEMA | 0.49 | 4 |
| PTFE | 0.57 | - |

**TABLE 2**

| Monomer used | Friction | Adhesivity |
|---|---|---|
| HEA | 0.52 | 4 |
| HEMA | 0.48 | 4 |

**TABLE 3**

| Monomer used | Friction | Adhesivity |
|---|---|---|
| HEA | 0.08 | 1 |
| HEMA | 0.11 | 0 |
| AAc = acrylic acid HEA = hydroxyethylacrylate HEMA = hydroxyethylmethacrylate | | |

## Claims

1. A method for reducing the coefficient of friction while at the same time increasing the paintability and adhesion of surfaces of formed bodies of elastomeric material, comprising depositing on the surface of said formed bodies at least one polymer layer obtained by vapour-phase polymerization, activated by ultraviolet radiation, of at least one acrylic monomer containing at least one terminal -COOH and/or -ROH where R is an alkylene radical containing from 1 to 4 carbon atoms.

2. A method for reducing the coefficient of friction while at the same time increasing the paintability and adhesion of surfaces of formed bodies of elastomeric material as claimed in claim 1, comprising:
a) positioning the formed body of elastomeric material in a treatment chamber;
b) feeding into the treatment chamber a liquid phase consisting essentially of an acrylic monomer containing at least one terminal -COOH and/or -ROH group where R has the aforesaid meaning;
c) vaporizing the acrylic monomer by application of vacuum to obtain a partial pressure of said monomer of between 5 and 5000 Pa, and preferably between 10 and 1500 Pa;
d) polymerizing the acrylic monomer onto the formed body by polymerization activated by ultraviolet radiation.

3. A method for reducing the coefficient of friction while at the same time increasing the paintability and adhesion of surfaces of formed bodies of elastomeric material as claimed in claim 1, comprising:
a) positioning the formed body of elastomeric material in a vacuum treatment chamber evacuated to a pressure of between 1 and 1500 Pa and preferably between 10 and 150 Pa;
b) feeding into the treatment chamber a vapour consisting essentially of an acrylic monomer containing at least one terminal -COOH and/or -ROH group where R has the aforesaid meaning, until a partial pressure of between 5 and 5000 Pa and preferably between 10 and 1500 Pa is obtained;
c) polymerizing the acrylic monomer onto the formed body by polymerization activated by ultraviolet radiation.

4. A method as claimed in any one of the preceding claims, wherein the elastomeric material is chosen from natural rubber, polyisoprene, polybutadiene, styrene-butadiene copolymers, ethylene-propylene copolymers, EDPM copolymers, butadiene acrylonitrile copolymers, polychloroprene and acrylic rubbers.

5. A method as claimed in any one of the preceding claims, wherein the acrylic monomers with -COOH and/or -ROH terminals are chosen from those with a vapour pressure exceeding 10 Pa at 25°C.

6. A method as claimed in any one of the preceding claims, wherein the irradiation is effected using wavelengths of between 190 and 600 nm.

7. A method as claimed in any one of the preceding claims, wherein on termination of polymerization the thickness deposited on the formed body of elastomeric material is generally between 100 and 50,000 nm.

8. Formed bodies of elastomeric material coated with a coating of thickness between 100 and 50,000 nm obtained by vapour-phase polymerization, activated by ultraviolet radiation, of acrylic monomers with terminal -COOH and/or -ROH groups, where R has the aforesaid meaning.

9. Formed bodies as claimed in claim 8, having a coefficient of friction of between 0.4 and 0.5, and an adhesivity, measured in accordance with ASTM D 3359, of between 3 and 5.
